Europäisches Patentamt

(19) **European Patent Office**

**Office européen des brevets**

(11) Veröffentlichungsnummer: **0 011 852**
**B1**

(12) **EUROPÄISCHE PATENTSCHRIFT**

(45) Veröffentlichungstag der Patentschrift:
**18.11.81**

(51) Int. Cl.³: **G 03 B 17/50**

(21) Anmeldenummer: **79104709.5**

(22) Anmeldetag: **27.11.79**

(54) **Kassette für lichtempfindliches, aus Doppelblatt-Einheiten bestehendes Material.**

(30) Priorität: **30.11.78 DE 2851891**

(43) Veröffentlichungstag der Anmeldung:
**11.06.80 Patentblatt 80/12**

(45) Bekanntmachung des Hinweises auf die Patenterteilung:
**18.11.81 Patentblatt 81/46**

(84) Benannte Vertragsstaaten:
**BE CH FR GB NL**

(56) Entgegenhaltungen:
**DE-A-2 226 579**
**DE-A1-2 519 677**
**DE-B-1 214 539**
**DE-C-471 213**
**US-A-3 832 728**
**US-A-3 946 411**

(73) Patentinhaber: **AGFA-GEVAERT Aktiengesellschaft,
Camera-Werk Patent- und Lizenzwesen Postfach,
D-8000 München 90 (DE)**

(72) Erfinder: **Fergg, Berthold, Dr., Enzianring 3,
D-8021 Taufkirchen (DE)**
Erfinder: **Osegowitsch, Viktor, Ahornring 47,
D-8021 Taufkirchen (DE)**
Erfinder: **Viehrig, Wolfgang, Sachranger Strasse 16,
D-8000 München 90 (DE)**

ACTORUM AG.

## Kassette für lichtempfindliches, aus Doppelblatt-Einheiten bestehendes Material

Die Erfindung betrifft eine Einrichtung zur Aufnahme von lichtempfindlichem, aus Doppelblatt-Einheiten bestehendem Material in einem kombinierten Kopier- udn Entwicklungsgerät, mit einer Kassette, aufweisend eine Belichtungsöffnung, einen ersten auf einer Seite der Kassette ausgeformten Schlitz, durch welchen mit den einzelnen Doppelblatt-Einheiten in Verbindung stehende Zuglaschen herausgeführt sind, einen zweiten, auf der gegenüberliegenden Seite angeordneten Schlitz für die Ausgabe der Doppelblatt-Einheiten und derart angeordnete Umlenkelemente, durch welche mit dem Betätigen einer Zuglasche die dazugehörende Doppelblatt-Einheit durch den zweiten Schlitz transportierbar ist, wobei sich die Zuglasche nach einem ausreichenden Transportweg der Doppelblatt-Einheit von selbst von dieser löst. Eine Einrichtung dieser Art ist aus der DE-A1 2 519 677 für einen photographischen Apparat vom Selbstentwicklertyp bekannt.

In der US-A 3 832 728 wird ein Kassettenhalter zur Aufnahme von Kassetten verschiedener Grösse beschrieben.

In der DE-PS 471 213 wird eine Kassette beschrieben, bei der ein in der Belichtungsöffnung liegender Schichtträger durch die herausgeführte Zuglasche auf die Rückseite des Schichtträger-Packs befördert werden kann. Zwischen den Schichtträgern sind sogenannte Schutzblätter eingelegt. Hierbei müssen also erst alle Schichtträger belichtet werden und können dann erst zum Zwecke des Entwickelns aus der Kassette gemeinsam entnommen werden.

Aus der DE-A1-1 214 539 ist eine Sofortbild-Kassette mit Doppelblatt-Einheiten bekannt, welche mittels Zuglaschen aus einem seitlichen Schlitz herausgezogen werden können. Dabei werden die Zuglaschen und die Doppelblatt-Einheiten durch ein und denselben Schlitz herausgezogen.

Aufgabe der Erfindung ist es, eine Einrichtung der eingangs genannten Art derart weiterzubilden, dass diese insbesondere hinsichtlich der Scharfeinstellung auch als Kopiergerät verwendet werden kann, wobei auch die Aufnahme von Kassetten unterschiedlichen Formats ermöglicht sein soll.

Diese Aufgabe wird durch die im Kennzeichen des Anspruchs 1 beschriebene Erfindung gelöst.

Mit der Erfindung wird erreicht, dass auf dem weissen Deckblatt der günstigste Bildausschnitt einer Vorlage ausgewählt und darauf scharf eingestellt werden kann. Dies kann nach jeder Aufnahme erfolgen. Im übrigen kann mittels der Zuglasche der Materialwechsel durchgeführt werden, wobei das Material unmittelbar in eine Entwicklungsstation eingegeben, in welcher Transportelemente das Material ergreifen, und in an sich bekannter Weise behandelt wird.

In einer Ausgestaltung der Erfindung soll lichtempfindliches Material unterschiedlichen Formats behandelt werden können. Zu diesem Zweck wird eine Überkassette vorgesehen, welche ebenfalls zwei Schlitze aufweist und grösser ist als die Kassette mit dem grössten Materialformat. Zur Positionierung der einzelnen Kassetten sind in der Überkassette Rahmeneinsätze vorgesehen.

Weitere Einzelheiten und Vorteile der Erfindung ergeben sich aus den Unteransprüchen. Ein Ausführungsbeispiel wird anhand von Figuren eingehend erläutert. Es zeigen:

Fig. 1 einen Querschnitt durch eine an sich bekannte Kassette und

Fig. 2 einen Querschnitt einer erfindungsgemässen Überkassette zur Aufnahme kleinerer Kassetten unterschiedlicher Grösse.

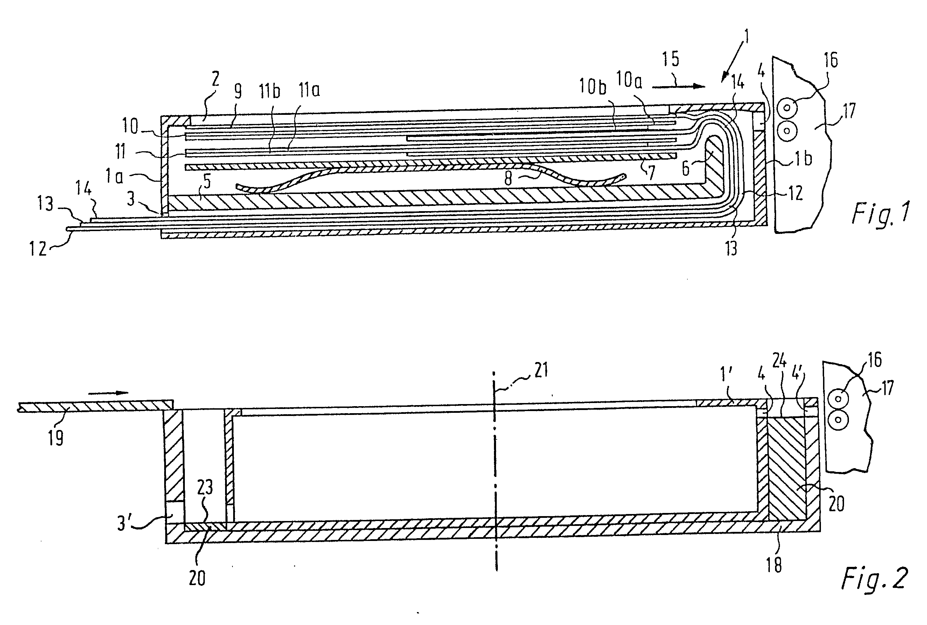

In Fig. 1 ist mit 1 eine flache Kassette bezeichnet, in welcher an einer der beiden Grossflächen eine Belichtungsöffnung 2 ausgeformt ist. An einer Schmalseite 1a der Kassette befindet sich oberhalb des Bodens ein Schlitz 3. In der dem Schlitz 3 gegenüberliegenden Seite 1b ist ein zweiter Schlitz 4 ausgebildet, der knapp unterhalb der die Belichtungsöffnung 2 aufweisenden Oberseite verläuft. Innerhalb der Kassette ist ein Zwischenboden 5 vorgesehen, der von der einen Kassettenseite 1a oberhalb des Schlitzes 3 ausgeht und kurz vor der Gegenkassettenseite 1b endet. An diesem Ende des Zwischenbodens 5 ist ein zur Kassettenoberseite weisendes Umlenkstück 6 angebracht oder zweckmässigerweise einstückig mit dem Zwischenboden 5 ausgebildet. Schliesslich ist oberhalb des Zwischenbodens 5 noch eine der Materialgrösse etwa entsprechende Andruckplatte 7 vorgesehen, welche von sich am Zwischenboden 5 abstützenden Federelementen 8 gegen die Belichtungsöffnung 2 gedrückt wird.

Zwischen der Andruckplatte 7 und der Belichtungsöffnung 2 ist nun der Pack mit dem lichtempfindlichen Material vorgesehen. Davon ist zunächst von oben her ausgehend ein weisses Blatt 9, sodann eine erste Doppelblatt-Einheit 10 und eine zweite Doppelblatt-Einheit 11 dargestellt, wobei letztere an der Andruckplatte 7 aufliegt. Das weisse Blatt 9 ist an dem zu dem Umlenkstück 6 weisenden Ende mit einer Zuglasche 12 verbunden, welche um das Umlenkstück 6 gelegt oberhalb der Bodenseite der Kassette durch den Schlitz 3 nach aussen geführt ist. Die Doppelblatt-Einheit 10 weist ein Negativblatt 10a und ein demgegenüber kleineres Positivblatt 10b auf, wobei der Grössenunterschied dieser beiden Blätter lediglich in einem in Transportrichtung gerichteten, überstehenden Rand des Negativblattes 10a deutlich wird. Der überstehende Rand hat den Vorteil, dass die Doppelblatt-Einheit zum Zwecke ihrer Benetzung in der Entwicklungsstation einfacher auf automatische Weise getrennt werden kann.

Auf der der Belichtungsöffnung 2 gegenüberliegenden Seite der Doppelblatt-Einheit 10 ist etwa in der Mitte ihrer Fläche eine Zuglasche 13 angebracht, welche ebenfalls wie die Zuglasche 12 um das Umlenkstück 6 auf der Unterseite der Kassette 1 durch den Schlitz 3 nach aussen geführt ist. Die Anbringung dieser Zuglasche 13 an der Unterseite der Doppelblatt-Einheit 10 ist dabei durch einen geeigneten Klebstoff so vorgenommen, dass eine ausreichende Haftung zwischen Zuglasche 13 und Doppelblatt-Einheit 10 bei etwa gleicher Bewegungsrichtung dieser beiden Teile gewährleistet ist, dass jedoch ein Ablösen oder Abschälen der Zuglasche vorgesehen ist, wenn deren Bewegungsrichtung einen Winkel von mehr als etwa 30 Grad gegenüber der Bewegungsrichtung der Doppelblatt-Einheit 10 einnimmt.

In gleicher Weise ist die nächste Zweiblatt-Einheit 11 mit einem überstehenden Negativblatt 11a, einem Positivblatt 11b und einer an dessen Unterseite haftend angebrachten Zuglasche 14 ausgebildet. Die Zuglasche 14 ist ebenfalls um das Umlenkstück 6 durch den Schlitz 3 nach aussen geführt. Die Länge der einzelnen Zuglaschen 12 bis 14 ist dabei zweckmässigerweise unterschiedlich ausgebildet, so dass ein leichtes Ergreifen der einzelnen Laschen in der richtigen Reihenfolge ermöglicht wird.

Die Wirkungsweise der anhand der Fig. 1 beschriebenen Kassette ist nun folgendermassen:

Nach dem Einsetzen der Kassette 1 in das Belichtungsgerät wird zunächst die Scharfeinstellung auf das weisse Blatt 9 vorgenommen. Nachdem diese durchgeführt ist, wird die Belichtung ausgeschaltet und an der Lasche 12 das weisse Blatt 9 aus der Kassette gezogen. Damit liegt in der Belichtungsöffnung 2 das Negativblatt 10a der obersten Doppelblatt-Einheit 10. Nach dem Belichten wird an der nächstfolgenden Lasche 13 gezogen, wodurch die Doppelblatt-Einheit 10 in Pfeilrichtung 15 verschoben wird. Mit dem weiteren Zug an der Lasche 13 wird schliesslich die Doppelblatt-Einheit 10 geradlinig in den Schlitz 4 transportiert, wogegen die Zuglasche 13 um das Umlenkstück 6 nach unten bewegt wird. Zweckmässigerweise sind die Zuglaschen am Vorderteil der Doppelblatt-Einheiten nicht angeklebt, so dass die Richtungsänderungen von Doppelblatt-Einheiten und Zuglaschen erleichtert sind. Sobald ein Teil der Doppelblatt-Einheiten durch den Schlitz 4 durchgeführt ist, ist auch die Bewegungsrichtung dieser Einheit festgelegt, wodurch das Abschälen der Zuglasche in einem Winkel von 60 bis 80 Grad auf einfache Weise unter Weiterbewegung der Doppelblatt-Einheit erfolgt. Die Doppelblatt-Einheit 10 kann schliesslich vom Transportmittel 16 einer sich anschliessenden Entwicklungsstation 17 erfasst werden, welche die Einheit unter Trennung der Blätter durch ein nichtdargestelltes Entwicklerbad führen.

Sobald nun die eine Doppelblatt-Einheit 10 aus der Kassette transportiert ist, rückt aufgrund der Federkraft 8 die nächste Doppelblatt-Einheit 11 in die Belichtungsebene unter der Belichtungsöffnung 2 nach und der Belichtungs- und Entnahmevorgang kann wie oben erfolgen.

Bei der erfindungsgemässen Ausbildung der Einrichtung ist zwischen jeder Doppelblatt-Einheit 10, 11 ein weisses Blatt mit nach aussen geführter Zuglasche eingelegt. Dies hat den Vorteil, dass vor jeder Belichtung eine Scharfeinstellung vorgenommen werden kann und dass vor allem die Kassette jederzeit aus der Belichtungsstation ohne besondere Abdichtmassnahme entnommen werden kann.

Schliesslich kann es von Vorteil sein, die Zuglaschen 12 für die weissen Deckblätter 9 mit einer anderen Form oder Farbe zu versehen als die Zuglaschen 13, 14 für die Doppelblatt-Einheiten. Damit kann der Fotoamateur stets sehen, ob sich ein lichtempfindliches Material oder ein Deckblatt in der Belichtungsöffnung 2 befindet.

Damit nun auch fotografisches Material unterschiedlicher Grösse verarbeitet werden kann, wird in einer Ausgestaltung der Erfindung eine sogenannte Haupt- oder Überkassette 18 vorgesehen, welche etwas grösser ist als die grösste Kassette des zu bearbeitenden Materials. Diese Überkassette 18 ist in der Form vergleichbar mit den Formatkassetten 1 und 1' und weist ebenso Austrittsschlitze 3' und 4' für die Zuglaschen bzw. die Doppelblatt-Einheiten auf. Nachdem die einzusetzenden Kassetten 1 bzw. 1' alle gleiche Höhe haben, sind die Schlitze 3' und 4' in gleicher Höhe zu den Schlitzen 3 und 4 in den Kassetten angeordnet. An der Oberseite der Überkassette 18 ist ein Deckel 19 vorgesehen, der in einer Ebene des Oberrandes der eingesetzten Kassette verschoben werden kann, so dass diese lichtdicht verschliessbar ist.

In der Überkassette 18 ist ein auswechselbarer Rahmeneinsatz 20 vorgesehen, dessen äusseres Profil dem Innenprofil der Überkassette 18 und dessen Innenprofil dem Aussenprofil der jeweiligen Kassette 1' entspricht. Mit diesem Rahmeneinsatz 20 wird eine genaue Positionierung der eingesetzten Kassette 1' zur optischen Achse 21 bewirkt. Ausserdem sind an dem Rahmeneinsatz 20 Übergangsflächen 23 und 24 vorgesehen. Die Übergangsfläche 23 stellt eine Verbindung der Zuglaschen-Schlitze 3 und 3' von eingesetzter Kassette 1' bzw. Überkassette 18 dar. Die Übergangsfläche 24 verbindet die untere Schlitzfläche 4 der eingesetzten Kassette 1' mit der unteren Fläche 4' der Überkassette 18. Damit wird erreicht, dass sowohl die Zuglaschen als auch die Doppelblatt-Einheiten in einer Ebene durch ihre Schlitze geführt werden können.

Beim Kassettenwechsel braucht lediglich die eine Materialkassette an der Oberseite der Überkassette 18 herausgenommen und bei Formatwechsel ebenso der Rahmeneinsatz entfernt zu werden. Nach dem Einbringen eines entsprechenden anderen Rahmeneinsatzes wird die neue Materialkassette derart in die Überkassette eingelegt, dass zunächst die herausstehenden Zuglaschen durch den Schlitz 3' hindurchgeführt werden und die Kassette sodann auf den Boden der Überkassette 18 zwischen die Begrenzungen des Rahmeneinsatzes 20 eingelegt wird. Die übrige Verfahrensweise entspricht derjenigen der in Fig. 1 beschriebenen Kassette.

## Patentansprüche

1. Einrichtung zur Aufnahme von lichtempfindlichem, aus Doppelblatt-Einheiten bestehendem Material in einem kombinierten Kopier- und Entwicklungsgerät, mit einer Kassette, aufweisend eine Belichtungsöffnung, einen ersten, auf einer Seite der Kassette ausgeformten Schlitz, durch welchen mit den einzelnen Doppelblatt-Einheiten in Verbindung stehende Zuglaschen herausgeführt sind, einen zweiten, auf der gegenüberliegenden Seite angeordneten Schlitz für die Ausgabe der Doppelblatt-Einheiten und derart angeordnete Umlenkelemente, durch welche mit dem Betätigen einer Zuglasche die dazugehörende Doppelblatt-Einheit durch den zweiten Schlitz transportierbar ist, wobei sich die Zuglasche nach einem ausreichenden Transportweg der Doppelblatt-Einheit von selbst von dieser löst, dadurch gekennzeichnet, dass zwischen jeder Doppelblatt-Einheit (10, 11) ein mit nach aussen geführter Zuglasche versehenes Deckblatt (9) eingelegt ist, das eine weisse Oberfläche aufweist.

2. Einrichtung nach Anspruch 1, gekennzeichnet durch eine gegenüber der Kassette (1) grössere Überkassette (18) mit Zuglaschen-Schlitz (3′) und Materialschlitz (4′) und durch in diese Überkassette (18) einsetzbare Positionierrahmen (20), mit unterschiedlichen, den Ausmassen der jeweiligen Kassette (1, 1′) angepassten Aussparungen.

3. Einrichtung nach Anspruch 2, dadurch gekennzeichnet, dass die Positionierrahmen (20) Überbrückungsflächen (23, 24) bilden, welche in Höhe der einzelnen Schlitze (3, 3′; 4, 4′) von Kassetten (1, 1′) bzw. Überkassette (18) angeordnet sind.

## Revendications

1. Dispositif de réception d'une surface photosensible, constituée d'unités à double feuille, dans un appareil combiné de reproduction et de développement, comprenant une cassette présentant une ouverture d'exposition, une première fente, qui est ménagée dans une face de la cassette et par laquelle on peut tirer vers l'extérieur des talons reliés aux unités à double feuille, une seconde fente, qui est ménagée dans la face opposée et qui est destinée à faire sortir les unités à double feuille, et des chicanes disposées de manière à ce que l'on puisse par leur intermédiaire faire passer dans la seconde fente l'unité à double feuille en en tirant le talon, le talon se détachant de soi-même de l'unité à double feuille après que celle-ci a parcouru un trajet suffisant, caractérisé en ce qu'une feuille (9), qui présente une surface blanche et qui est munie d'un talon permettant de la tirer à l'extérieur, est interposée entre chaque unité (10, 11) à double feuille.

2. Dispositif suivant la revendication 1, caractérisé par une cassette (18) principale plus grande que la cassette (1) et ayant une fente (3′) pour un talon et une fente (4′) pour la surface photosensible et par des cadres (20) de mise en position placés dans cette cassette (18) principale et ayant des évidements différents adaptés aux dimensions extérieures de chaque cassette (1, 1′).

3. Dispositif selon la revendication 2, caractérisé en ce que les cadres (20) de mise en position forment des surfaces (23, 24) de raccordement, qui sont disposées au niveau des fentes (3, 3′; 4, 4′) des cassettes (1, 1′) et de la cassette (18) principale.

## Claims

1. Arrangement for housing light-sensitive material composed of double-sheet units in a combined printing and developing arrangement, including a cassette comprising an exposure aperture, a first slot formed in one side of the cassette and through which pass traction straps connected to the individual double-sheet units, a second slot provided in the opposite side of the cassette for discharging the double-sheet units and deflection elements arranged so that, on actuation of a traction-strap, the relevant double-sheet unit can be transported through the second slot, whereby the traction-strap automatically releases itself from the double-sheet unit after a sufficient travel of the unit, characterized in that, interposed between each double-sheet unit (10, 11) is a cover-sheet (9) having a white upper face and provided with a traction strap extending to the exterior of the cassette.

2. Arrangement according to claim 1, characterized by an over-cassette (18) which is larger than the cassette (1) and which is provided with a traction strap slot (3′) and a material slot (4′) and by locating-frames (20) which have various cut-outs matching the outer dimensions of the respective cassette (1, 1′) and which can be inserted in the over-cassette (18).

3. Arrangement according to claim 2, characterized in that, the locating-frames (20) from bridging surfaces (23, 24) which are arranged at the level of the individual slots (3, 3′; 4, 4′) of the cassettes (1, 1′) and over-cassette (18).

Fig.1

Fig.2